(19)

Europäisches Patentamt

European Patent Office

Office européen des brevets

(11) **EP 3 584 296 A1**

(12) **EUROPEAN PATENT APPLICATION**

(43) Date of publication:
**25.12.2019  Bulletin 2019/52**

(21) Application number: **18178427.3**

(22) Date of filing: **19.06.2018**

(51) Int Cl.:
*C09J 7/38* (2018.01)          *C09D 151/08* (2006.01)
*C09J 7/28* (2018.01)          *B32B 3/00* (2006.01)
*F16B 2/00* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **3M Innovative Properties Company Saint Paul, MN 55133-3427 (US)**

(72) Inventors:
• **Grimm, Florian**
  **87439 Kempten (DE)**

• **Bieber, Pierre Reinhard**
  **40221 Düssseldorf (DE)**
• **Fritz, Emelie**
  **41564 Kaarst (DE)**

(74) Representative: **Mössner, Brigitte**
  **3M Deutschland GmbH**
  **Office of Intellectual Property Counsel (PC 072P)**
  **Carl-Schurz-Strasse 1**
  **41453 Neuss (DE)**

(54) **CONNECTING ELEMENT FOR THE FRICTION-INCREASING CONNECTION OF COMPONENTS, PROCESS FOR MAKING A CONNECTING ELEMENT AND USE OF A CONNECTING ELEMENT**

(57)     The present disclosure relates to a connecting element and to a process for producing said connecting element. The present disclosure further relates to the use of said connecting element for friction-increasing connection of a first and a second component to be joined in machine, plant and motor vehicle construction and energy generation.

EP 3 584 296 A1

**Description**

Technical Field

The present disclosure relates to a connecting element for the friction-increasing connection of components to be joined.

Background

Force-locked connections are frequently used in all areas of machine, plant and motor vehicle construction and energy generation for the transmission of forces or torques. The size of the force which can be respectively transmitted depends not only on the structural design but also primarily on the static friction value (coefficient of static friction) of the component surfaces connected to one another. Therefore, in the case of such force-locked connections, it is endeavored to provide friction-increasing measures that allow the greatest possible transverse forces and torques to be transmitted safely. Further, force-locked connections may also be referred to as non-positive connections or frictional connections.
It is known to use friction-increasing interlayers to increase the holding forces or increase the torques than can be transmitted in bolted and clamped connections. US 6,347,905 B1 discloses a connecting element for the friction-increasing play-free reversible connection of components to be joined. The connecting element comprises a spring-elastic steel foil which bears on its surface particles of a defined size, which are fixed on the spring-elastic foil by means of a binder phase. The particles consist of a hard material, preferably of diamond, cubic boron nitride, aluminum oxide, silicon carbide or boron carbide. By using this separate connecting element, the coefficient of static friction can be increased in frictional connections.
For many bolted or clamped connections, the connecting element, used for friction-increasing connection of two components to be joined, should be pre-assembled to one of the two components. By pre-assembling the connecting element, the assembly of the friction-increasing connection is facilitated and it is ensured during assembly that the connecting element cannot be omitted. The pre-assembly also ensures that only a single connecting element is used for each frictional connection. A connecting element being pre-assembled to one of the two components to be frictionally joined can be transported, for example to the manufacturer finally assembling the frictional connection of the two components to be joined. Methods for pre-assembling a connecting element are disclosed in US 2003/077115 A1 and US 2011/0039119 A1. In US 2003/077115 A1, the connecting element displays a component surface lying outside the joining surfaces of the connecting element, the component surface being shaped in such a way that is displays an elastic or springy property which makes possible a reversible locking of the connecting element on one of the workpieces to be joined together. The production of these connecting elements is very costly, and in some applications there is not enough space to apply such a connecting element. In US 2011/0039119 A1, the connecting element is fixed on the metal workpiece securely for purposes of assembly and transportation by welding involving the formation of locally confined weld points. The welding process is very expensive, as a separate welding equipment is required for the pre-assembling of the connecting element.
There is a need to further improve frictional connections of components with respect to pre-assemby solutions for connecting elements being reliable and easy to apply.
As used herein, the term "comprise" shall include also the terms "consist essentially of" and "consists of".

Summary

In a first aspect, the present disclosure relates to a connecting element comprising a metal substrate having a first joining surface on one side of the substrate and a second joining surface on an opposite side of the substrate, wherein each joining surface comprises hard particles fixed on the metal substrate by a metallic binder layer, and wherein the connecting element further comprises a pressure sensitive adhesive on at least one part of the first joining surface.
In another aspect, the present disclosure also relates to a process for producing such a connecting element, comprising

    providing a metal substrate having a first joining surface on one side of the substrate and a second joining surface on an opposite side of the substrate,
    fixing hard particles on each joining surface with a metallic binder layer, and
    applying a pressure sensitive adhesive onto at least one part of the first joining surface.

In yet a further aspect, the present disclosure also relates to a process for fixing a connecting element as disclosed herein to a first component having a component joining surface, comprising

providing a connecting element as disclosed herein, and
bonding the pressure sensitive adhesive on the first joining surface of the connecting element to the component joining surface of the first component.

In yet a further aspect, the present disclosure also relates to a frictional connection comprising a first component having a component joining surface, a second component having a component joining surface, and a connecting element as disclosed herein, wherein the first and second component are frictionally joined with the connecting element.

In yet a further aspect, the present disclosure also relates to the use of such a connecting element to connect a first component and a second component to be joined in machine, plant and motor vehicle construction and energy generation.

In some embodiments of the connecting element disclosed herein, the connecting element further comprises a pressure sensitive adhesive on at least one part of the second joining surface of the connecting element.

The connecting element according to the present disclosure can be pre-assembled to a first component in a reliable and easy manner, before it is joined with the second component to be frictionally joined with the first component.

In some embodiments, with the connecting element further comprising a pressure sensitive adhesive on at least one part of the second joining surface, the connecting element according to the present disclosure is significantly less susceptible to corrosion than the connecting element disclosed in US 6,347,905 B1.

In some embodiments, with the connecting element further comprising a pressure sensitive adhesive on at least one part of the second joining surface, the connecting element according to the present disclosure is suitable for frictional connections where electrochemical corrosion is a problem as well as fretting.

By using a connecting element according to the present disclosure, the coefficient of static friction of frictional connections is increased. Surprisingly, the coefficient of static friction of frictional connections can be increased despite the use of a pressure sensitive adhesive on the joining surface of the connecting element.

In some embodiments, by using a connecting element according to the present disclosure, the coefficient of static friction of frictional connections is higher compared to using a connecting element without a pressure sensitive adhesive.

Brief description of the drawings

The present disclosure is explained in more detail on the basis of the drawings, in which

Figures 1 - 4 each schematically show a cross-sectional view of a connecting element of the present disclosure, and

Figures 5 - 9 each schematically show a cross-sectional view of a connecting element of the present disclosure and of a first component and a second component to be joined, wherein the first and second component are frictionally-coupled with the connecting element.

Detailed Description

The hard particles preferably consist of a material which, under the particular conditions of use, does not react chemically either with the materials of the components to be joined or with environmental media. It is preferably an inorganic material.

Preferably, the hard particles are selected from the group consisting of carbides, nitrides, borides, silicon dioxide, aluminum oxide, diamond and mixtures thereof. Examples of carbides are silicon carbide, tungsten carbide and boron carbide, examples of nitrides are silicon nitride and cubic boron nitride. Preferably, diamonds are used as hard particles.

The size of the hard particles is selected in such a way that the damage to the joining surfaces caused by the particles being pressed into the surface does not reach an impermissible level. Preferably, this is ensured if the particle diameter is not greater than about three times the peak-to-valley height of the joining surfaces, which peak to valley results from machining of the joining surfaces. A mean particle size of 100 $\mu$m ($d_{50}$) or less generally fulfils this requirement. For example, hard particles with a mean particle size ($d_{50}$) of 10 $\mu$m, 25 $\mu$m, 35 $\mu$m, 55 $\mu$m or 75 $\mu$m can be used. In some embodiments, hard particles with a mean particle size ($d_{50}$) from 10 to 75 $\mu$m are used, or from 25 to 35 $\mu$m. The mean particle size can be measured by laser diffraction (Cilas, wet measurement).

The hard particles should have a narrow grain size range in which the scatter about a given nominal diameter amounts to no more than about +/- 50%. In some embodiments, the scatter about a given nominal diameter should not amount to more than about +/-25%.

The number of hard particles per unit surface area of the joining surfaces of the connecting element may be selected in such a way that the normal force which is available for joining the components together is sufficient to ensure that the particles are pressed into the surface of the components to be joined. This will generally be the case if the area percentage of the joining surfaces of the connecting element which is covered with hard particles is from 3% to 60%. The area percentage of the joining surfaces of the connecting element which is covered with hard particles can be selected dependent on the mean particle size ($d_{50}$) of the hard particles. For example, for a mean particle size ($d_{50}$) of the hard particles of 10 $\mu$m from about 8% to 20% of the joining surfaces of the connecting element may be covered with hard particles, for a mean particle size ($d_{50}$) of 25 $\mu$m the area percentage may be from about 8% to 25%, and for a mean particle size ($d_{50}$) of 35 $\mu$m, the area percentage may be from about 10% to 30%.

The thickness of the metal substrate is selected depending on the application. In some embodiments, the thickness of the metal substrate is up to 2.0 mm. In other embodiments, the thickness is up to 1.0 or up to 0.5 mm. In some other embodiments, the thickness is up to 0.2 mm, in some other embodiments, the thickness is up to 0.1 mm. For large connecting elements that need to have higher strength and stiffness, for example connecting elements used for parts of wind turbines, the thickness of the metal substrate can be up to 0.5 mm or up to 1.0 mm or up to 2.0 mm. For applications that require a thin connecting element, for example if the design of the components to be joined should not be changed, the thickness of the metal substrate can be 0.2 mm or less, or 0.1 mm or less, preferably 0.1 mm.

The metal substrate may be made from steel, for example from unalloyed steel. Also high-alloy steel or stainless steel can be used. Examples for unalloyed steel are grade C75S - 1.1248 according to DIN EN 10132-4 or grade C60S -1.1211 according to DIN EN 10132-4.

The metallic binder layer may comprise nickel.

The thickness of the metallic binder layer may be from 5 to 70 $\mu$m, specifically from 10 to 70 $\mu$m, more specifically from 10 to 50 $\mu$m.

In some embodiments, the thickness of the metallic binder layer is not more than 60% of the mean particle size ($d_{50}$) of the hard particles. In some other embodiments, the thickness of the metallic binder layer is not more than 50% of the mean particle size ($d_{50}$) of the hard particles. In yet some other embodiments, the thickness of the metallic binder layer is not more than 20% of the mean particle size ($d_{50}$) of the hard particles. The thickness of the metallic binder layer may be at least 5 $\mu$m. The hard particles are protruding from the metallic binder layer. When the connecting element is in frictional engagement with the components to be joined, the hard particles are pressed into the surfaces of the components to be joined, therefore increasing the coefficient of friction of the connection.

The metal substrate of the connecting element disclosed herein has a first joining surface on one side of the substrate and a second joining surface on an opposite side of the substrate. The connecting element disclosed herein comprises a pressure sensitive adhesive on at least one part of the first joining surface of the connecting element.

The pressure sensitive adhesive is bonded to the hard particles. In some embodiments, the pressure sensitive adhesive is bonded to the hard particles and to the metallic binder layer.

The pressure sensitive adhesive may be selected from the group consisting of rubber-based pressure sensitive adhesives, acrylic-based pressure sensitive adhesives and silicone-based pressure sensitive adhesives.

In some embodiments of the connecting element disclosed herein, the pressure sensitive adhesive comprises a continuous layer. The continuous layer of a pressure sensitive adhesive on at least one part of the first joining surface of the connecting element may be in the form of stripes or rings. For example, for a connecting element with a metal substrate having the shape of a ring-shaped foil or disc with a central hole, the continuous layer may have the shape of a circular ring with an outer diameter being smaller than the outer diameter of the hole disc, and with an inner diameter being larger than the diameter of the hole disc. The pressure sensitive adhesive on at least one part of the first joining surface of the connecting element may also cover the complete surface of the first joining surface. The continuous layer of the pressure sensitive adhesive may be applied onto the first joining surface in the form of a film or a tape.

In some embodiments, the continuous layer of a pressure sensitive adhesive comprises a first layer of a first pressure sensitive adhesive and a second layer of a second pressure sensitive adhesive. A carrier layer is positioned between the first and the second layer. The first and the second pressure sensitive adhesive may be of a different pressure sensitive adhesive material, or may be of the same pressure sensitive adhesive material. The carrier layer is bearing the first pressure sensitive adhesive and the second pressure sensitive adhesive. The carrier layer may be made of a plastic film such as polyolefin (e.g., polypropylene, polyethylene), polyvinyl chloride, polyester (e.g., polyethylene terephthalate), polyamide, cellulose acetate and ethyl cellulose. The first layer of a first pressure sensitive adhesive and the second layer of a second pressure sensitive adhesive with the carrier layer positioned between the first and the second layer may be applied onto the first joining surface of the connecting element in the form of a double-sided tape.

The thickness of the continuous layer of a pressure sensitive adhesive may be from 1 to 25 $\mu$m. In some embodiments, the thickness of the continuous layer may be from 3 to 10 $\mu$m. If the continuous layer comprises a first layer of a first pressure sensitive adhesive and a second layer of a second pressure sensitive adhesive and a carrier layer is positioned between the first and the second layer, the sum of thickness of the first and second layer and of the carrier layer may be from 3 $\mu$m to 25 $\mu$m. The thickness of the first layer may be from 1 $\mu$m to 23 $\mu$m, the thickness of the second layer may be from 1 $\mu$m to 23 $\mu$m, and the thickness of the carrier layer may be at least 1 $\mu$m. In some embodiments, the sum of thickness of the first and second layer and of the carrier layer is from 3 to 10 $\mu$m. In some embodiments, the thickness of the first layer may be from 1 $\mu$m to 10 $\mu$m or from 1 to 5 $\mu$m, the thickness of the second layer may be from 1 $\mu$m to 10 $\mu$m or from 1 to 5 $\mu$m, and the thickness of the carrier layer may be at least 1 $\mu$m.

Typically, the thickness of the continuous layer of a pressure sensitive adhesive is less than the mean particle size ($d_{50}$) of the hard particles from which the thickness of the metallic binder layer is subtracted. Preferably, the thickness of the continuous layer of a pressure sensitive adhesive is less than the height of the hard particles protruding from the metallic binder layer. The thickness of the continuous layer of the pressure sensitive adhesive can be as thin as possible while maintaining the adhesive properties. This will generally be the case if the thickness of the continuous layer is at least 1 $\mu$m.

The pressure sensitive adhesive of the continuous layer may have a peel adhesion value above 0.20 N/mm, above 0.25 N/mm, above 0.30 N/mm, above 0.35 N/mm, above 0.40 N/mm, above 0.45 N/mm, above 0.50 N/mm, or even above 0.55 N/mm, when measured at room temperature (23 °C) according to the test method described in the experimental section.

The pressure sensitive adhesive of the continuous layer may provide a static shear strength performance value of greater than 10000 min, when measured at 90 °C according to the static shear test method described in the experimental section. The pressure sensitive adhesive of the continuous layer may provide a static shear strength performance value of greater than 10000 min, when measured at room temperature (23 °C) according to the static shear test method described in the experimental section.

The pressure sensitive adhesive of the continuous layer may be selected from the group consisting of rubber-based pressure sensitive adhesives, acrylic-based pressure sensitive adhesives, and silicone-based pressure sensitive adhesives.

The pressure sensitive adhesive of the continuous layer may comprise a crosslinking additive. The crosslinking additive may be selected from the group of multifunctional (meth)acrylate compounds. The pressure sensitive adhesive may be crosslinked thermally or with actinic radiation, more in particular with e-beam or UV irradiation.

The rubber-based pressure sensitive adhesives may be natural rubber-based adhesives or synthetic rubber-based adhesives. Synthetic rubber-based pressure sensitive adhesives may be based on, for example, polyisoprene, polybutadiene, styrene-isoprene-styrene copolymer (SIS), styrene-butadiene-styrene copolymer (SBS), and butyl rubber. Also thermoplastic block copolymer adhesives, polyolefin based pressure sensitive adhesives such as ethylene propylene diene monomer (EPDM) rubber and polyisobutylene (PIB), and olefin block co-polymer based pressure sensitive adhesives such as INFUSE™ olefin block copolymers commercially available from Dow may be used.

In some embodiments of the present disclosure, the pressure sensitive adhesive comprises a rubber-based elastomeric material, at least one hydrocarbon tackifier and optionally a crosslinking additive. The optional crosslinking additive may be selected from the group of mulitifunctional (meth)acrylate compounds.

In some embodiments, the pressure sensitive adhesive is a rubber-based pressure sensitive adhesive and comprises:

a) a multi-arm block copolymer of the formula $Q_n$-Y, wherein:

(i) Q represents an arm of the multi-arm block copolymer and each arm independently has the formula G-R,
(ii) n represents the number of arms and is a whole number of at least 3, and
(iii) Y is the residue of a multifunctional coupling agent,
wherein each R is a rubbery block comprising a polymerized conjugated diene, a hydrogenated derivative of a polymerized conjugated diene, or combinations thereof; and each G is a glassy block comprising a polymerized monovinyl aromatic monomer; and

b) at least one hydrocarbon tackifier which is primarily compatible with the rubbery blocks.

In some embodiments, the pressure sensitive adhesive is a rubber-based pressure sensitive adhesive and comprises:

a) a multi-arm block copolymer of the formula $Q_n$-Y, wherein:

(i) Q represents an arm of the multi-arm block copolymer and each arm independently has the formula G-R,
(ii) n represents the number of arms and is a whole number of at least 3, and
(iii) Y is the residue of a multifunctional coupling agent,
wherein each R is a rubbery block comprising a polymerized conjugated diene, a hydrogenated derivative of a polymerized conjugated diene, or combinations thereof; and each G is a glassy block comprising a polymerized monovinyl aromatic monomer;

b) optionally, a plasticizer having a weight average molecular weight $M_w$ comprised between 500 and 100.000 g/mol;

c) at least one hydrocarbon tackifier which is primarily compatible with the rubbery blocks;

d) a glassy block compatible aromatic resin having a softening point value (RBSP) of at least 150°C, when measured by the ring and ball test method; and

e) optionally, a linear block copolymer of the formula L-(G)$_m$, wherein L is a rubbery block comprising a polymerized olefin, a polymerized conjugated diene, a hydrogenated derivative of a polymerized conjugated diene, or any combinations thereof; and wherein m is 1 or 2.

The multi-arm block copolymer is such that n ranges from 3 to 10.

Suitable rubbery blocks R for use in the rubber-based pressure sensitive adhesive described above comprise polymerized conjugated dienes, hydrogenated derivatives of a polymerized conjugated diene, or combinations thereof. Specifically, the rubbery block of at least one arm may comprise a polymerized conjugated diene selected from the group consisting of isoprene, butadiene, ethylene butadiene copolymers, hydrogenated derivatives of polyisoprene or polybutadiene, and combinations or mixtures thereof. Advantageously, the rubbery blocks of each arm may comprise a polymerized conjugated diene selected from the group consisting of isoprene, butadiene, ethylene butadiene copolymers, hydrogenated derivatives of polyisoprene or polybutadiene, and any combinations or mixtures thereof. Preferably, at least one of the rubbery blocks of the multi-arm block copolymer comprises a conjugated diene selected from the group consisting of isoprene, butadiene, and any combinations thereof. More preferably, each of the rubbery blocks of the multi-arm block copolymer comprises a conjugated diene selected from the group consisting of isoprene, butadiene, and any combinations or mixtures thereof.

At least one arm of the multi-arm block copolymer may be selected from the group consisting of styrene-isoprene-styrene, styrene-butadiene-styrene, styrene-ethylene-butadiene-styrene, styrene-ethylene-propylene-styrene, and combinations thereof. Preferably, each arm of the multi-arm block copolymer is selected from the group consisting of styrene-isoprene-styrene, styrene-butadiene-styrene, styrene-ethylene-butadiene-styrene, styrene-ethylene-propylene-styrene, and any combinations thereof.

The glassy block of at least one arm of the multi-arm block copolymer may comprise a monovinyl aromatic monomer selected from the group consisting of styrene, styrene-compatible blends, and any combinations thereof. Advantageously, the glassy blocks of each arm comprise a monovinyl aromatic monomer selected from the group consisting of styrene, styrene-compatible blends, and any combinations thereof.

Multi-arm block copolymers for use in the rubber-based pressure sensitive adhesive described above are disclosed e.g. in US 7,163,741 B1 (Khandpur et al.). Methods of making multi-arm block copolymers are described in, e.g., U.S. Patent No. 5,296,547 (Nestegard et al.), or in U.S. Patent No. 5,393,787 (Nestegard et al.).

The rubber-based pressure sensitive adhesive comprising the multi-arm block copolymer may comprise from 20 wt% to 80 wt%, from 20 wt% to 70 wt%, from 25 wt% to 60 wt%, from 30 wt% to 60 wt%, or even from 35 wt% to 60 wt% of the multi-arm block copolymer of the formlula Q$_n$-Y, based on the weight of the pressure sensitive adhesive. The pressure sensitive adhesive may comprise from 20 wt% to 70 wt%, from 25 wt% to 60 wt%, or even from 25 wt% to 50 wt% of the hydrocarbon tackifier, based on the weight of the pressure sensitive adhesive. The pressure sensitive adhesive may further comprise from 0.5 to 35 wt%, from 1 to 30 wt%, from 2 to 25 wt%, or even from 5 to 25 wt% of the glassy block compatible aromatic resin, based on the weight of the pressure sensitive adhesive. The pressure sensitive adhesive optionally may further comprise from 2 wt% to 20 wt%, from 4 wt% to 15 wt%, from 5 wt% to 12 wt%, or even from 5 wt% to 10 wt% of the plasticizer, based on the weight of the pressure sensitive adhesive. The pressure sensitive adhesive optionally may further comprise from 20 wt% to 80 wt%, from 20 wt% to 70 wt%, from 25 wt% to 60 wt%, from 30 wt% to 60 wt%, or even from 35 wt% to 60 wt% of the linear block copolymer.

As the hydrocarbon tackifier which is primarily compatible with the rubbery blocks, either solid or liquid hydrocarbon tackifiers may be added, solid hydrocarbon tackifiers being preferred. A tackifier is "compatible" with a block if it is miscible with that block. Suitable tackifying resins may include terpene resins such as polyterpenes (e.g., alpha pinene-based resins, beta pinene-based resins, and limonene-based resins) and aromatic-modified polyterpene resins (e.g., phenol modified polyterpene resins); and petroleum-based hydrocarbon resins such as C5-based hydrocarbon resins, C9-based hydrocarbon resins, C5/C9-based hydrocarbon resins, and dicyclopentadiene-based resins. Combinations of various tackifiers can be used if desired. Tackifiers derived from C5 monomers are referred to as C5-based hydrocarbon resins while those derived from C9 monomers are referred to as C9-based hydrocarbon resins.

The C5-based hydrocarbon resins are commercially available from Eastman Chemical Company under the trade designations PICCOTAC and EASTOTAC, from Cray Valley under the trade designation WINGTACK, from Neville Chemical Company under the trade designation NEVTAC LX, and from Kolon Industries, Inc. under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTALEX, PLASTOLYN, and PICCOTAC, and ENDEX, from Cray Valley under the trade designations NORSOLENE, from Ruetgers N.V. under the trade designation NOVAREZ, and from Kolon Industries, Inc.

under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREZ that are 50 to 100 percent (e.g., 50 percent, 70 percent, 90 percent, and 100 percent) hydrogenated. The partially hydrogenated resins typically have some aromatic rings.

Various C5/C9-based hydrocarbon tackifiers are commercially available from Arakawa under the trade designation ARKON, from Zeon under the trade designation QUINTONE, from Exxon Mobil Chemical under the trade designation ESCOREZ, and from Newport Industries under the trade designations NURES and H-REZ (Newport Industries). In the context of the present disclosure, suitable hydrocarbon tackifiers for use herein may be advantageously selected among those C5/C9-based hydrocarbon tackifiers commercially available from Exxon Mobil Chemical under the trade designation ESCOREZ.

Exemplary hydrocarbon tackifiers that are primarily compatible with the rubbery blocks are advantageously selected from the group consisting of aliphatic hydrocarbon resins, cycloaliphatic hydrocarbon resins, aromatic modified aliphatic and cycloaliphatic resins, hydrogenated hydrocarbon resins, terpene and modified terpene resins, terpene-phenol resins, rosin esters, and any combinations or mixtures thereof.

Advantageous hydrocarbon tackifiers which are primarily compatible with the rubbery blocks are selected from the group consisting of polymeric terpenes, hetero-functional terpenes, rosin acids, esters of rosin acids, disproportionated rosin acid esters, hydrogenated, C5 aliphatic resins, C9 hydrogenated aromatic resins, C5/C9 aliphatic/aromatic resins, dicyclopentadiene resins, hydrogenated hydrocarbon resins arising from C5/C9 and dicyclopentadiene precursors, hydrogenated styrene monomer resins, and any blends thereof.

The expression "glassy block compatible aromatic resin" is meant to refer to an aromatic resin which is compatible with the glassy blocks. An aromatic resin is "compatible" with the glassy blocks if it is miscible with the glassy blocks. The softening point value (RBSP) of the glassy block compatible aromatic resin can be determined by the ring and ball test method according to ASTM E28-14.

The glassy block compatible aromatic resin may have a weight average molecular weight $M_w$ of 30.000 g/mol or less, of 25.000 g/mol or less, of 20.000 g/mol or less, of 15.000 g/mol or less, or even of 10.000 g/mol or less.

The glassy block compatible aromatic resin may have a softening point value (RBSP) of at least 150 °C, at least 155°C, at least 160°C, at least 165°C, at least 170°C, at least 180°C, at least 190°C or even at least 200°C, as determined by the ring and ball test method according to ASTM E28-14.

The glassy block compatible aromatic resin may have a glass transition temperature ($T_g$) of at least 100°C, at least 110°C, at least 120°C, at least 130°C, at least 140°C, at least 150°C, or even at least 160°C.

The glassy block compatible aromatic resin may be selected from the group consisting of hydrocarbon aromatic resins, arylene oxide resins, C9-based hydrocarbon aromatic resins, C9-based hydrogenated hydrocarbon aromatic resins, polyarylene oxide resins, in particular polyphenylene oxides or polyphenylene ethers, indene coumarone resins, aromatic resins based on copolymers of C9 with maleic anhydride, and any combinations or mixtures thereof.

The plasticizer may have a weight average molecular weight $M_w$ comprised between 500 and 100.000 g/mol, between 500 and 80.000 g/mol, between 500 and 70.000 g/mol, between 500 and 65.000 g/mol, between 500 and 60.000 g/mol, between 500 and 60.000 g/mol, or even between 500 and 55.000 g/mol.

The plasticizer may be selected from the group consisting of mineral oils, paraffinic oils, naphthenic oils, liquid hydrocarbon resins, liquid polyterpene resins, polyisobutylenes, polyisoprenes, polybutadienes, amorphous polyolefins and copolymers thereof, silicones, polyacrylates, oligomeric polyurethanes, ethylene propylene copolymers, any combinations or mixtures thereof.

The addition of a linear block copolymer to the rubber-based pressure sensitive adhesive as described above may advantageously impact the processability of the (co)polymeric precursor of the pressure sensitive adhesive due to the viscosity lowering effect of this compound. Also, the presence of a linear block copolymer as described above may additionally provide the resulting pressure sensitive adhesive with an improved tack performance.

The rubber-based pressure sensitive adhesive may be non-crosslinked, in particular not crosslinked with actinic radiation, more in particular with e-beam or UV irradiation. The rubber-based pressure sensitive adhesive may be free of any crosslinking additive.

The rubber-based pressure sensitive adhesive may comprise a crosslinking additive. The crosslinking additive may be selected from the group of multifunctional (meth)acrylate compounds. The rubber-based pressure sensitive adhesive may be crosslinked thermally or with actinic radiation, more in particular with e-beam or UV irradiation.

The pressure sensitive adhesive may be a hot melt adhesive.

The rubber-based pressure sensitive adhesive as described above can be manufactured by a method which comprises the step of compounding the multi-arm block copolymer, the at least one hydrocarbon tackifier which is primarily compatible with the rubbery blocks, optionally the glassy block compatible aromatic resin, further optionally the plasticizer, and further optionally, a linear block copolymer. The method may be a solvent-free method. In a particular aspect, the method of manufacturing the pressure sensitive adhesive may comprise a hotmelt processing step, preferably a continuous hotmelt mixing processing step, more preferably a hotmelt extrusion processing step, in particular a twin screw hotmelt extrusion processing step.

The rubber-based pressure sensitive adhesive as described above may also be manufactured by a solvent-based method. The solvent-based method may comprise the steps of

a) dissolving the multi-arm block copolymer, the at least one hydrocarbon tackifier which is primarily compatible with the rubbery blocks, optionally the glassy block compatible aromatic resin, optionally the plasticizer, and further optionally, a linear block copolymer, in an organic solvent, thereby forming a solution of a pressure sensitive adhesive; and

b) removing the organic solvent.

The rubber-based pressure sensitive adhesive may then be coated/applied upon a variety of substrates (e.g., release liner, tape backing, or carrier materials for double-sided adhesive tapes) to produce adhesive-coated articles such as films or tapes. The liner or backing or carrier can be formed of a polymeric material. Suitable polymeric liner or backing or carrier materials include, but are not limited to, polymeric films such as those prepared from polypropylene, polyethylene, polyvinyl chloride, polyester (polyethylene terephthalate (PET) or polyethylene naphthalate), polycarbonate, polymethylmethacrylate (PMMA), cellulose acetate, cellulose triacetate, ethyl cellulose, and polyurethane.

The rubber-based pressure sensitive adhesive may be coated/applied on a substrate (e.g., release liner, tape backing, carrier for double-sided adhesive tapes) using any conventional coating techniques modified as appropriate to the particular substrate. For example, pressure sensitive adhesives may be applied/coated to a variety of solid substrates by methods such as roller coating, flow coating, dip coating, spin coating, spray coating knife coating, and die coating.

In some embodiments of the present disclosure, the pressure sensitive adhesive is an acrylic-based pressure sensitive adhesive.

The acrylic-based pressure sensitive adhesives may be solvent based acrylics, waterborne acrylics, hotmelt acrylics and UV cured acrylics.

In some embodiments of the present disclosure, the pressure sensitive adhesive is an acrylic-based pressure sensitive adhesive and comprises:

a) at least one copolymer comprising:

i) an acrylic or methacrylic acid ester of a non-tertiary alcohol, and
ii) pendant styrenic polymeric moieties; and

b) a polyarylene oxide polymer.

The acrylic acid ester may be formed from an alcohol having from 1 to 14 carbon atoms. The acrylic acid ester may be isooctyl acrylate or 2-ethylhexyl acrylate. The acrylic acid ester may be copolymerized with a polar monomer to form a polymeric backbone having styrenic polymeric moieties pendant from the polymeric backbone; the polar monomer may be selected from the group consisting of acrylic acid, methacrylic acid, itaconic acid, acrylamide, methacrylamide, acrylonitrile, and methacrylonitrile. The pendant styrenic polymeric moieties may have a molecular weight in the range of about 2,000 to about 30,000. The pendant styrenic polymeric moieties may comprise from 1 to 30 weight percent of the total weight of said copolymer. The pendant styrenic polymeric moieties may be formed from polymers selected from the group consisting of styrene, alpha-methyl styrene, 3-methylstyrene, vinyl toluene, ehtylstyrene, t-butylstyrene, isopropylstyrene, dimethylstyrene, vinylnaphtalenes, and mixtures thereof.

The copolymer of said acrylic-based pressure sensitive adhesive may comprise copolymerized A and B monomers, wherein:

a) A is a monomeric acrylic or methacrylic acid ester of a non-tertiary alcohol, said alcohol having from about 1 to about 14 carbon atoms, and
b) B is a monomer having the general formula $X\text{-}(Y)_n\text{-}Z$ wherein:

X is a vinyl group copolymerizable with said A monomer;
Y is a divalent linking group; where n can be zero or 1;
Z is a monovalent styrenic polymeric moiety having a molecular weight in the range of about 2,000 to 30,000 and being essentially unreactive under copolymerization conditions.

The polyarylene oxide polymer of said acrylic-based pressure sensitive adhesive may comprise polyphenylene ether or poly(2,6-dimethyl-1,4-phenylene ether). The polyarylene oxide polymer may have a glass transition temperature of at least 100 °C. The acrylic-based pressure sensitive adhesive may further comprise a tackifier.

Said acrylic-based pressure-sensitive adhesive may be made by a solvent-free method comprising:

a) providing a polymeric composition containing

i) at least one copolymer comprising:

1) an acrylic or methacrylic acid ester of a non-tertiary alcohol, and
2) pendant styrenic polymeric moieties; and

ii) a polyarylene oxide polymer;

b) heating the polymeric composition to a temperature above its glass transition temperature without substantially degrading the polymeric components; and
c) mixing the polymeric composition.

The polymeric composition of said acrylic-based pressure-sensitive adhesive may then be coated/applied upon a variety of substrates (e.g., release liner, tape backing, or carrier materials for double-sided adhesive tapes) to produce adhesive-coated articles such as films or tapes. The liner or backing or carrier can be formed of a polymeric material. Suitable polymeric liner or backing or carrier materials include, but are not limited to, polymeric films such as those prepared from polypropylene, polyethylene, polyvinyl chloride, polyester (polyethylene terephthalate (PET) or polyethylene naphthalate), polycarbonate, polymethyl(meth)acrylate (PMMA), cellulose acetate, cellulose triacetate, ethyl cellulose, and polyurethane.

The polymeric composition of said acrylic-based pressure-sensitive adhesive may be coated/applied on a substrate (e.g., release liner, tape backing, carrier for double-sided adhesive tapes) using any conventional coating techniques modified as appropriate to the particular substrate. For example, pressure sensitive adhesives may be applied/coated to a variety of solid substrates by methods such as roller coating, flow coating, dip coating, spin coating, spray coating knife coating, and die coating.

In some embodiments of the connecting element disclosed herein, the pressure sensitive adhesive comprises a plurality of discontinuous islands. The thickness of the discontinuous islands may be from 10 to 150 $\mu$m. More specifically, the thickness of the discontinuous islands may be from 10 to 100 $\mu$m, or from 10 to 50 $\mu$m. The islands may have a major axis length of from 10 to 500 $\mu$m. More specifically, the islands may have a major axis length of from 10 to 50 $\mu$m or from 10 to 20 $\mu$m, or from 20 to 50 $\mu$m, or from 20 to 100 $\mu$m, or from 30 to 50 $\mu$m, or from 50 to 100 $\mu$m, or from 20 to 500 $\mu$m, or from 20 to 200 $\mu$m. The islands may cover from 10% to 75% of at least one of the joining surfaces of the connecting element.

The pressure sensitive adhesive comprising a plurality of discontinuous islands may be selected from the group consisting of rubber-based pressure sensitive adhesives, acrylic-based pressure sensitive adhesives and silicone-based pressure sensitive adhesives.

Suitable acrylic-based pressure sensitive adhesives are, for example, isoamylacrylate, N-butylacrylate, mixtures of N-butylacrylate and hydroxymethacrylate, copolymers of isooctyl acrylate and acrylic acid, and mixtures of isooctylacrylate, acrylic aicd, methyl methacrylate and styrene. Suitable rubber-based pressure sensitive adhesives are natural rubber-based and synthetic rubber-based. Suitable silicone-based pressure sensitive adhesives may comprise polymethyl diphenyl siloxane, or polymethyl siloxane.

In some embodiments of the pressure sensitive adhesive comprising a plurality of discontinuous islands, the pressure sensitive adhesive material is an acrylic-based pressure sensitive adhesive comprising a copolymer comprising 90 to 99.5 percent by weight of one or more oleophilic, water-emulsifiable alkyl acrylate esters and 0.5 to 10 percent by weight of one or more monomers selected from the group consisting of oil-insoluble, water-soluble, ionic monomers and maleic anhydride. The copolymer is inherently tacky, elastomeric, and in the form of microspheres. The microspheres are insoluble in organic solvents, and form suspensions in all common solvents except highly polar solvents such as water, methanol, and ethanol. Typical useful solvents are ethyl acetate, tetrahydrofuran, heptane, 2-butanone and other ketones, benzene, cyclohexane, esters, isopropanol, and higher alcohols. The copolymer microspheres are small in size, having diameters in the range of about 1 to about 250 $\mu$m, the diameter of the majority of the spheres falling in the range of about 5 to about 150 $\mu$m. Solvent suspensions of these microspheres may be sprayed by conventional techniques or may be incorporated in aerosol containers with suitable propellants such as iso-butane or isobutylene. The tacky microspheres provide a pressure-sensitive adhesive which has a low degree of adhesion permitting separation, repositioning and rebonding of adhered objects. The tacky spheres resist permanent deformation, regaining their spherical shape upon release of pressure. The copolymer microspheres can be prepared by an aqueous suspension polymerization technique as described in US 3,691,140.

The alkyl acrylate ester monomer portion of the copolymer microspheres may comprise one ester monomer or a mixture of two or more ester monomers. Similarly, the oil-insoluble, water-soluble monomer portion of the copolymer microspheres may comprise maleic anhydride alone, an ionic monomer alone, a mixture of two or more ionic monomers, or a mixture of maleic anhydride with one or more ionic monomers.

The alkyl acrylate ester monomer portion of these microspheres consist of those alkyl acrylate monomers which are oleophilic, water emulsifiable, of restricted water-solubility, and which, as homopolymers, generally have glass transition temperatures below about -20 °C. Suitable alky acrylate ester monomers include iso-octyl acrylate, 4-methyl-2-pentyl acrylate, 2-methylbutyl acrylate, sec-butyl acrylate, and the like. Acrylate monomers with glass transition temperatures higher than -20 °C (i.e. tert-butyl acrylate, iso-bornyl acrylate or the like) may be used in conjunction with one of the above described acrylate ester monomers.

The water-insoluble ionic monomer portion of these microspheres is comprised of those monomers which are substantially insoluble in oil. By substantially oil-insoluble and water-soluble it is meant that the monomer has a solubility of less than 0.5% by weight and, a distribution ratio at a given temperature (preferably 50-65 °C), of solubility in the oil phase to solubility in the aqueous phase of less than about 0.005. Ionic monomers conforming to the preceding criteria include trimethylamine methacrylimide, trimethylamine p-vinyl benzimide, ammonium acrylate, sodium acrylate, N,N-dimethyl-N-($\beta$-methacryloxyethyl) ammonium propionate betaine, 1,1-dimethyl-1-(2-hydroxypropyl) amine methacrylimide, 4,4,9-trimethyl-4-azonia-7-oxo-8-oxa-9-decene-1 -sulphonate, and 1,1-dimethyl-1-(2,3-dihydroxypropyl) amine methacrylimide.

The peel adhesion of the pressure sensitive adhesive comprising a plurality of discontinuous islands may be at least 8 g/cm width, measured as adhesion to polyester film. Usually the peel adhesion of the pressure sensitive adhesive comprising a plurality of discontinuous islands is not more than 80 g/cm width, measured as adhesion to polyester film, but it is also possible that the peel adhesion is above 80 g/cm width, measured as adhesion to polyester film. For measuring the peel adhesion, the adhesive to be tested can be first applied to a surface to which it will adhere tenaciously, e.g., anodized aluminum or alumina-surfaced biaxially oriented polyester film such as that described in US 4,190,321. A 2.54 cm x 2.54 cm strip of 25 micrometer biaxially oriented polyethylene terephthalate film is then applied to the adhesive surface and rolled down with two passes of a 2 kg roller. Using a tensile testing machine, the force required to pull the polyester strip from the adhesive surface at a 90° angle at a rate of 30.5 cm per minute is then determined. Peel adhesion tests can be run both immediately after sample preparation and after a specified delay that allows the adhesion bond to stabilize.

In some embodiments, the connecting element as disclosed herein further comprises a polymer coating on at least one joining surface to prevent corrosion of the connecting element. The corrosion protective polymer coating can be applied as a first layer on the joining surfaces, and the pressure sensitive adhesive is applied as a second layer on the polymer coating.

In some embodiments, the connecting element as disclosed herein further comprises a pressure sensitive adhesive on at least one part of the second joining surface of the connecting element.

The present disclosure also relates to a frictional connection comprising a first component having a component joining surface, a second component having a component joining surface, and a connecting element as disclosed herein, wherein the first and second component are frictionally joined with the connecting element.

In some embodiments of the frictional connection, the pressure sensitive adhesive of the connecting element comprises a continuous layer. The thickness of the continuous layer may be from 1 to 25 $\mu$m. Typically, the thickness of the continuous layer is less than the mean particle size ($d_{50}$) of the hard particles from which the thickness of the metallic binder layer is subtracted. Preferably, the thickness of the continuous layer may be less than the height of the hard particles protruding from the metallic binder layer. The thickness of the continuous layer should be as thin as possible while maintaining the adhesive properties, as the hard particles need to be pressed through the continuous layer in the frictional connection. The maximum thickness of the continuous layer should be selected in such a way that the thickness of the continuous layer corresponds to the height of the hard particles protruding from the metallic binder layer from which the penetration depth of the hard particles into the component to be joined, i.e. the first or second component, is subtracted. The height of the hard particles protruding from the metallic binder layer can be calculated by subtracting the height of the metallic binder layer from the mean particle size ($d_{50}$) of the hard particles.

In a specific aspect, the maximum thickness of the continuous layer may be selected by calculation according to the following formula:

$$TC = D * (1 - 0.62 * SQR(P / (HV * AP))) - TB \qquad (I)$$

wherein

TC [$\mu$m] is the thickness of the continuous layer of the pressure sensitive adhesive,

D [μm] is the mean particle size ($d_{50}$) of the hard particles,
"SQR" means square root,
P [MPa] is the contact pressure of the first and second component frictionally joined with the connecting element,
HV [kg/mm²] is the Vickers hardness of the first or second component to be joined,
AP [%] is the area percentage of joining surface of the connecting element covered with hard particles, and
TB [μm] is the thickness of the metallic binder layer.

When a connecting element as disclosed herein, but without a continuous layer of a pressure sensitive adhesive on any of the two opposite joining surfaces, is in frictional contact with two components to be joined, the hard particles are pressed into the surface of the components, leaving an air gap between the metallic binder layer and the surface of the component. The width of this gap corresponds to the height of the hard particles protruding from the metallic binder layer from which the penetration depth of the hard particles into the component to be connected is subtracted. The maximum thickness of the continuous layer of the pressure sensitive adhesive should correspond to the width of the gap between the metallic binder layer and the components to be joined.

The connecting element disclosed herein can be produced by a process comprising

providing a metal substrate having a first joining surface on one side of the substrate and a second joining surface on an opposite side of the substrate,
fixing hard particles on each joining surface with a metallic binder layer, and
applying a pressure sensitive adhesive onto at least one part of the first joining surface.

The metallic binder layer may be a nickel layer. The metallic binder layer may be produced by means of an electrodeposition process, for example by an external current-free (= chemical) electroplating process, also called electroless plating process, preferably by an electroless nickel plating process. The hard particles may be applied on the joining surfaces of the metal substrate by means of an electrodeposition process, for example by an electroless nickel plating process, using a chemical nickel bath with dispersed hard particles. Such electrodeposition and electroplating processes are customary in coating technology. The chemical nickel layer can be hardened by means of a heat treatment at up to about 400 °C, with the result that the adhesion to the metal substrate is improved and the inherent hardness of the layer is increased. The hard particles are fixed on the joining surfaces of the metal substrate with the metallic binder layer.

The pressure sensitive adhesive may comprise a continuous layer. The pressure sensitive adhesive comprising a continuous layer may be applied onto at least one part of the first joining surface in the form of a pressure-sensitive adhesive film, i.e. a continuous layer of a pressure sensitive adhesive coated on a liner, or in the form of a double-sided tape, i.e. a continuous layer of a first pressure sensitive adhesive coated on one side of a tape carrier and a continuous layer of a second pressure sensitive adhesive coated on the opposite side of the tape carrier. The pressure sensitive adhesive in the form of a film or tape may be applied onto the first joining surface of the metal substrate by bringing the pressure sensitive adhesive film or tape into close contact with the first joining surface and then pressing the pressure sensitive adhesive tape onto the first joining surface. Typically, the pressure applied for pressing the continuous layer of the pressure sensitive adhesive onto the first joining surface is at least 100 kPa and may be at least 300 kPa. The pressure applied for pressing the continuous layer of the pressure sensitive adhesive onto the first joining surface may be higher than 300 kPa and could even be as high as the contact pressure of the first and second component frictionally joined with the connecting element. Typically, the pressure applied for pressing the continuous layer of the pressure sensitive adhesive onto the first joining surface of the metal substrate of the connecting element is 1 to 5 MPa.

The pressure sensitive adhesive may comprise a plurality of discontinuous islands. The pressure sensitive adhesive in the form of a plurality of discontinuous islands may be applied onto the joining surfaces of the metal substrate by coating the joining surfaces with tacky microspheres. The coating can be done by methods such as spraying or sprinkling. For example, the pressure sensitive adhesive comprising a plurality of discontinuous islands may be applied onto the joining surfaces of the metal substrate by spraying a solution or dispersion of a pressure sensitive adhesive in a liquid carrier onto the joining surfaces of the metal substrate, and thereafter evaporating the liquid carrier, leaving a discontinuous pattern of spaced islands of adhesive. In order to control the adhesive island thickness, adhesive emulsions are thinned with suitable amounts of water and adhesive solutions with an appropriate solvent. For spraying, air atomizing spray heads, airless spray guns, electrostatic spray head, and ultrasonic spray heads can all be employed to create a plurality of discontinuous islands. As the adhesive emerges from the spray nozzle, the stream emitted from the nozzle breaks the adhesive into a cloud of small droplets. The adhesive droplets should be on the order of 10 to 150 μm in diameter. With all spray equipment, the relative motion between the spray head and the substrate must be sufficiently rapid to deposit discrete droplets that do not cover the entire surface when dried.

For spraying the solution or dispersion of a pressure sensitive adhesive in a liquid carrier, various embodiments of pressure sensitive adhesives can be used, such as acrylic-based pressure sensitive adhesives, rubber-based pressure sensitive adhesives and silicone-based pressure sensitive adhesives. Examples are for acrylic-based pressure sensitive adhesives are aqueous isoamylacrylate emulsion; aqueous N-butylacrylate emulsion; aqueous N-butylacrylate:hydroxymethacrylate emulsion; organic solution of copolymer comprising isooctyl acrylate and acrylic acid, such as 10% heptane solution of 95.5:4.5 isooctyl acrylate:acrylic acid copolymer of the type dscribed in Ulrich US Patent RE 24,906; and aqueous emulsion of mixtures of isooctylacylate, acrylic acid, methyl methacrylate and styrene, such as aqueous 92:4:3:1 isooctylacrylate:acrylic acid:methyl methacrylate:styrene emulsion, of the type described in Ulrich US Patent RE 24,906. Examples for rubber-based pressure sensitive adhesives are organic solution of natural rubber, alkylated polyhydroxyphenyl and polyterpene resin, such as 19.8% heptane solution of 100 parts pale crepe natural rubber, 1 part alkylated polyhydroxyphenyl, and 75 parts of polyterpene resin; and mixtures of natural rubber latex, carboxylated SBR emulsion, aliphatic hydrocarbon emulsion, and acid-stable emulsion of pentaerythritol ester of hydrogenated rosin, such as homogeneous blend of, on a dry weight basis, 100 parts natural rubber latex, and 46.9 parts acid-stable emulsion of pentaerythritol ester of hydrogenated rosin. Examples for silicone-based pressure sensitive adhesives are mixtures of polymethyl diphenyl siloxane and benzoyl peroxide, such as a blend of, on a weight basis, 100 parts polymethyl diphenyl siloxane containing 12% phenyl and 20 parts of as 10% solution of benzoyl peroxide; and mixtures of polydimethyl diphenyl siloxane and benzoyl peroxide, such as a blend of, on a weight basis, 100 parts polydimethyl diphenyl siloxane containing 12% phenyl and 20 parts of as 10% solution of benzoyl peroxide. The pressure sensitive adhesive can be sprayed as described in US 5,194,299.

Another example for an acrylic-based pressure sensitive adhesive, that can be sprayed in a liquid carrier in order to obtain discontinuous islands of a pressure sensitive adhesive, is an organic dispersion of elastomeric copolymer microspheres comprising 90 to 99.5 percent by weight of one or more oleophilic, water-emulsifiable alkyl acrylate esters and 0.5 to 10 percent by weight of one or more monomers selected from the group consisting of oil-insoluble, water-soluble, ionic monomers and maleic anhydride.

Further disclosed herein is a process for fixing a connecting element to a first component having a component joining surface, comprising

providing a connecting element as disclosed herein, and
bonding the pressure sensitive adhesive on the first joining surface of the connecting element to the component joining surface of the first component.

For bonding the pressure sensitive adhesive on the first joining surface of the connecting element to the component joining surface of the first component, the connecting element is brought into close contact with the component joining surface of the first component and then the connecting element is pressed onto the component joining surface of the first component. Thereby the connecting element is bonded to the first component by means of the pressure sensitive adhesive and is thus pre-assembled to the first component. Typically, the pressure applied for pressing the connecting element onto the component joining surface of the first component is at least 5 kPa and may be at least 100 kPa. The pressure applied for pressing the connecting element onto the component joining surface of the first component may be higher than 100 kPa and could even be as high as the contact pressure of the first and second component frictionally joined with the connecting element. Typically, the pressure applied for pressing the connecting element onto the component joining surface of the first component is at most 300 kPa.

The connecting element as disclosed herein is used in a process for frictionally-coupling the first component and a second component with the connecting element, the process comprising

providing a connecting element as disclosed herein, and
bonding the pressure sensitive adhesive on the first joining surface of the connecting element to the component joining surface of the first component,
pressing the hard particles of the first joining surface of the connecting element into the component joining surface of the first component, and
pressing the hard particles of the second joining surface of the connecting element into the component joining surface of a second component,
thereby frictionally-coupling the first component and the second component with the connecting element.

After having the connecting element pre-assembled to the first component, the second joining surface of the connecting element is brought into close contact with the component joining surface of the second component, and the first and second component are mechanically connected with one another, for example with screws. The hard particles of the first joining surface are pressed into the component joining surface of the first component, and the hard particles of the second joining surface of the connecting element are pressed into the component joining surface of the second component, thereby frictionally-coupling the first component and the second component with the connecting element.

Various embodiments of the connecting element according to the present disclosure are shown in the drawings.

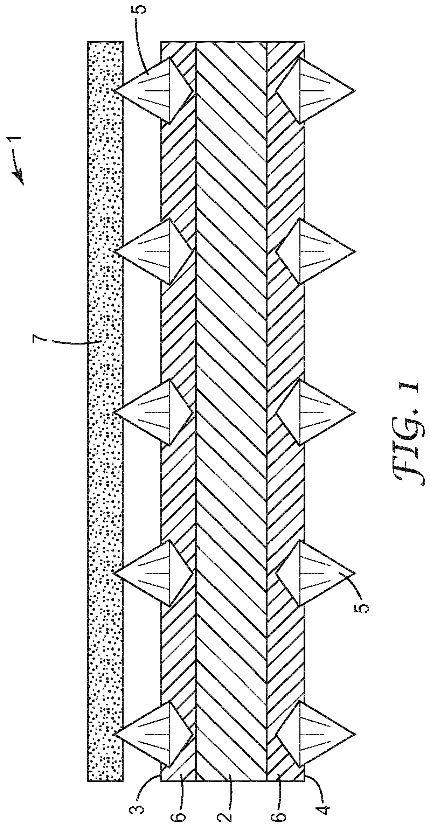

Figure 1 schematically shows the cross-sectional view of a first embodiment of a connecting element 1 of the present disclosure. The metal substrate 2 has a first joining surface 3 on one side of the substrate 2 and a second joining surface 4 on an opposite side of the substrate 2. Each joining surface 3, 4 comprises hard particles 5 which are fixed on the metal substrate 2 by a metallic binder layer 6. The connecting element 1 comprises a pressure sensitive adhesive 7 on the first joining surface 3. The pressure sensitive adhesive 7 is bonded to the hard particles 5. The pressure sensitive adhesive 7 consists of a continuous layer. The continuous layer of the pressure sensitive adhesive 7 may be applied onto the first joining surface 3 in the form of a film, i.e. a continuous layer of a pressure sensitive adhesive coated on a release liner such as a PET liner. The liner is removed before bonding the connecting element to the first component.

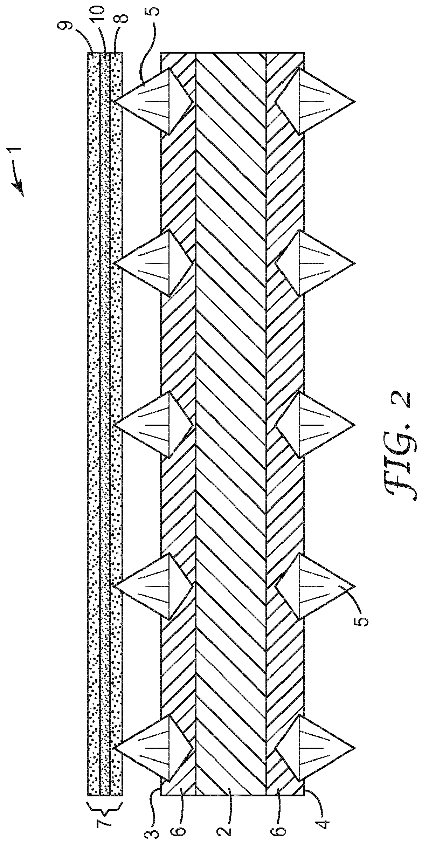

Figure 2 schematically shows the cross-sectional view of a second embodiment of a connecting element 1 of the present disclosure. The metal substrate 2 has a first joining surface 3 on one side of the substrate 2 and a second joining surface 4 on an opposite side of the substrate 2. Each joining surface 3, 4 comprises hard particles 5 which are fixed on the metal substrate 2 by a metallic binder layer 6. The connecting element 1 comprises a pressure sensitive adhesive 7 on the first joining surface 3. The pressure sensitive adhesive 7 is bonded to the hard particles 5. The pressure sensitive adhesive 7 consists of a continuous layer. The continuous layer comprises a first layer 8 of a first pressure sensitive adhesive and a second layer 9 of a second pressure sensitive adhesive. Between the first and the second layer 8, 9, a carrier layer 10 is positioned. The first layer 8 of a first pressure sensitive adhesive and the second layer 9 of a second pressure sensitive adhesive may be applied onto the first joining surface 3 of the connecting element 1 in the form of a double-sided tape, having a carrier layer 10 between the first and second layer. On top of the second layer 9 of a second pressure sensitive adhesive is a release liner (not shown in the figure) which is removed before bonding the connecting element to the first component.

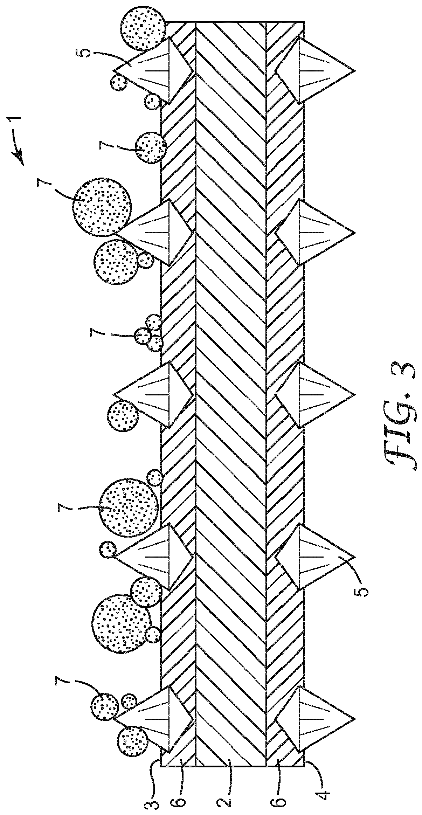

Figure 3 schematically shows the cross-sectional view of a third embodiment of a connecting element 1 of the present disclosure. The metal substrate 2 has a first joining surface 3 on one side of the substrate 2 and a second joining surface 4 on an opposite side of the substrate 2. Each joining surface 3, 4 comprises hard particles 5 which are fixed on the metal substrate 2 by a metallic binder layer 6. The connecting element 1 comprises a pressure sensitive adhesive 7 on the first joining surface 3. The pressure sensitive adhesive 7 consists of a plurality of discontinuous islands. The discontinuous islands are bonded to the hard particles 5 and to the metallic binder layer 6. The pressure sensitive adhesive 7 may be applied onto the first joining surface 3 of the connecting element 1 by spraying of adhesive microspheres.

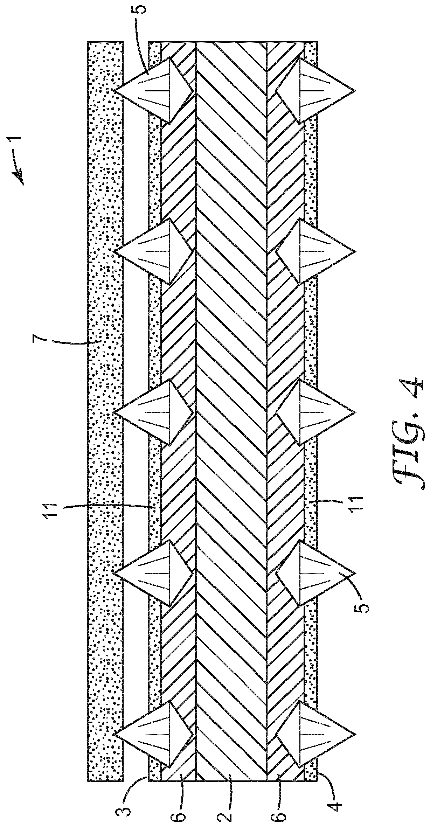

Figure 4 schematically shows the cross-sectional view of a fourth embodiment of a connecting element 1 of the present disclosure. The metal substrate 2 has a first joining surface 3 on one side of the substrate 2 and a second joining surface 4 on an opposite side of the substrate 2. Each joining surface 3, 4 comprises hard particles 5 which are fixed on the metal substrate 2 by a metallic binder layer 6. The metallic binder layer 6 of each joining surface 3, 4 is coated with a layer of a polymeric material 11 to prevent corrosion of the connecting element 1. The connecting element 1 comprises a pressure sensitive adhesive 7 on the first joining surface 3. The pressure sensitive adhesive 7 is bonded to the hard particles 5. The pressure sensitive adhesive 7 consists of a continuous layer. The continuous layer of the pressure sensitive adhesive 7 may be applied onto the first joining surface 3 in the form of a film, i.e. a continuous layer of a pressure sensitive adhesive coated on a release liner such as a PET liner. The liner is removed before bonding the connecting element to the first component.

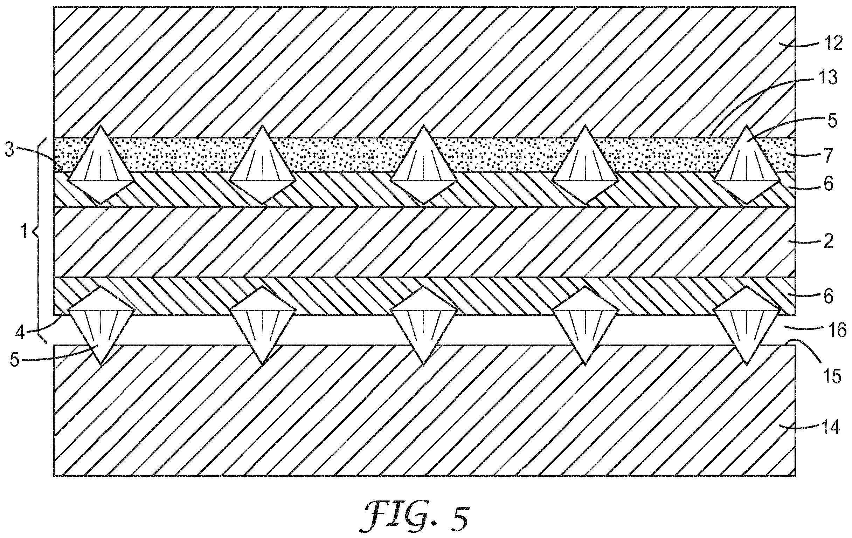

Figure 5 schematically shows a cross-sectional view of a first embodiment of a frictional connection according to the present disclosure, comprising the connecting element 1 of Figure 1, a first component 12 having a component joining surface 13, and a second component 14 having a component joining surface 15. The first component 12 and the second component 14 are frictionally joined with the connecting element of Figure 1, i.e. the connecting element of Figure 1 is in frictional connection with the first and second component 12, 14 to be joined. In a first step, the pressure sensitive adhesive 7 on the first joining surface 3 of the connecting element 1 has been bonded to the component joining surface 13 of the first component 12. In a second step, the hard particles 5 of the first joining surface 3 of the connecting element 1 have been pressed into the component joining surface 13 of the first component 12, and the hard particles 5 of the second joining surface 4 of the connecting element 1 have been pressed into the component joining surface 15 of the second component 14, thereby frictionally-coupling the first component 12 and the second component 14 with the connecting element 1. Between the metallic binder layer 6 of the second joining surface 4 of the connecting element 1 and the component joining surface 15 of the second component 14 there may be a gap 16. The hard particles 5 have been pressed through the continuous layer of the pressure sensitive adhesive 7, and the continuous layer of the pressure sensitive adhesive 7 has been pressed into the gap between the joining surface 13 of the first component 12 and the metallic binder layer 6 of the first joining surface 3 of the connecting element 1. The coefficient of static friction is enhanced by the hard particles 5 being pressed into the first and second component 12, 14 to be joined.

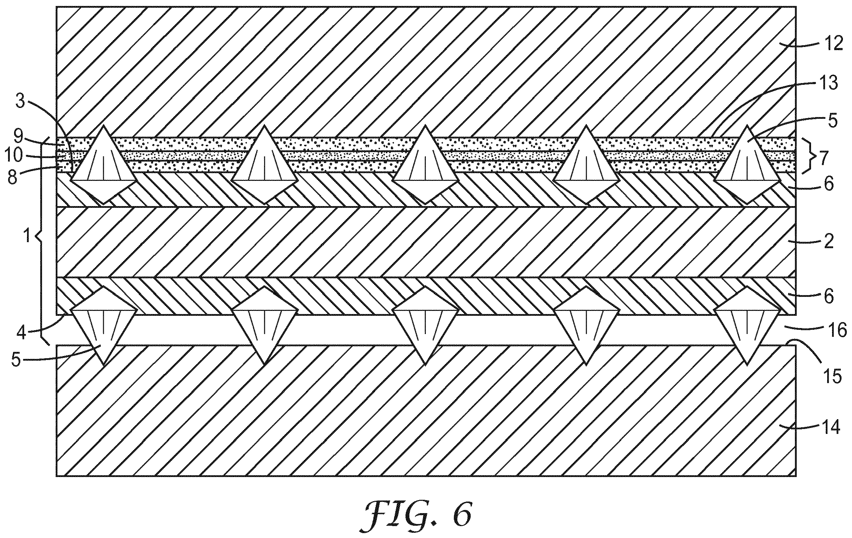

Figure 6 schematically shows a cross-sectional view of a second embodiment of a frictional connection according to the present disclosure, comprising the connecting element 1 of Figure 2, a first component 12 having a component joining surface 13, and a second component 14 having a component joining surface 15. The first component 12 and the second component 14 are frictionally joined with the connecting element of Figure 2, i.e. the connecting element of Figure 2 is in frictional connection with the first and second component 12, 14 to be joined. In a first step, the pressure sensitive adhesive 7 on the first joining surface 3 of the connecting element 1 has been bonded to the component joining surface 13 of the first component 12. In a second step, the hard particles 5 of the first joining surface 3 of the connecting element 1 have been pressed into the component joining surface 13 of the first component 12, and the hard particles 5 of the second joining surface 4 of the connecting element 1 have been pressed into the component joining surface 15 of the second component 14, thereby frictionally-coupling the first component 12 and the second component 14 with the connecting element 1. Between the metallic binder layer 6 of the second joining surface 4 of the connecting element 1 and the component joining surface 15 of the second component 14 there may be a gap 16. The hard particles 5 have been pressed through the continuous layer of the pressure sensitive adhesive 7, and the continuous layer of the pressure sensitive adhesive 7 has been pressed into the gap between the joining surface 13 of the first component 12 and the metallic binder layer 6 of the first joining surface 3 of the connecting element 1. The continuous layer of the pressure sensitive adhesive 7 comprises a first layer 8 of a first pressure sensitive adhesive and a second layer 9 of a second pressure sensitive adhesive. Between the first and the second layer 8, 9, a carrier layer 10 is positioned. The coefficient of static friction is enhanced by the hard particles 5 being pressed into the first and second component 12, 14 to be joined.

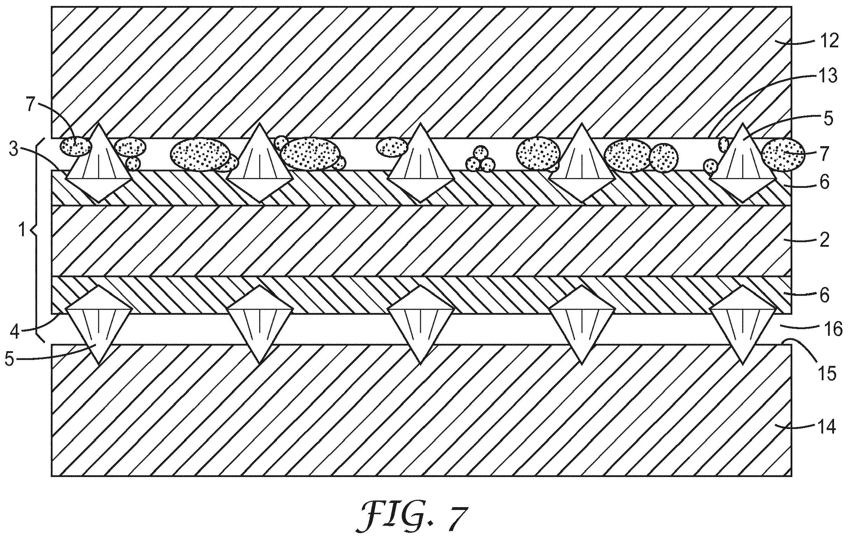

Figure 7 schematically shows a cross-sectional view of a third embodiment of a frictional connection according to the present disclosure, comprising the connecting element 1 of Figure 3, a first component 12 having a component joining surface 13, and a second component 14 having a component joining surface 15. The first component 12 and the second component 14 are frictionally joined with the connecting element of Figure 3, i.e. the connecting element of Figure 3 is in frictional connection with the first and second component 12, 14 to be joined. In a first step, the pressure sensitive adhesive 7 on the first joining surface 3 of the connecting element 1 has been bonded to the component joining surface 13 of the first component 12. In a second step, the hard particles 5 of the first joining surface 3 of the connecting element 1 have been pressed into the component joining surface 13 of the first component 12, and the hard particles 5 of the second joining surface 4 of the connecting element 1 have been pressed into the component joining surface 15 of the second component 14, thereby frictionally-coupling the first component 12 and the second component 14 with the connecting element 1. Between the metallic binder layer 6 of the second joining surface 4 of the connecting element 1 and the component joining surface 15 of the second component 14 there may be a gap 16. The discontinuous islands of the pressure sensitive adhesive 7 have been pressed into the gap between the joining surface 13 of the first component 12 and the metallic binder layer 6 of the first joining surface 3 of the connecting element 1. The coefficient of static friction is enhanced by the hard particles 5 being pressed into the first and second component 12, 14 to be joined.

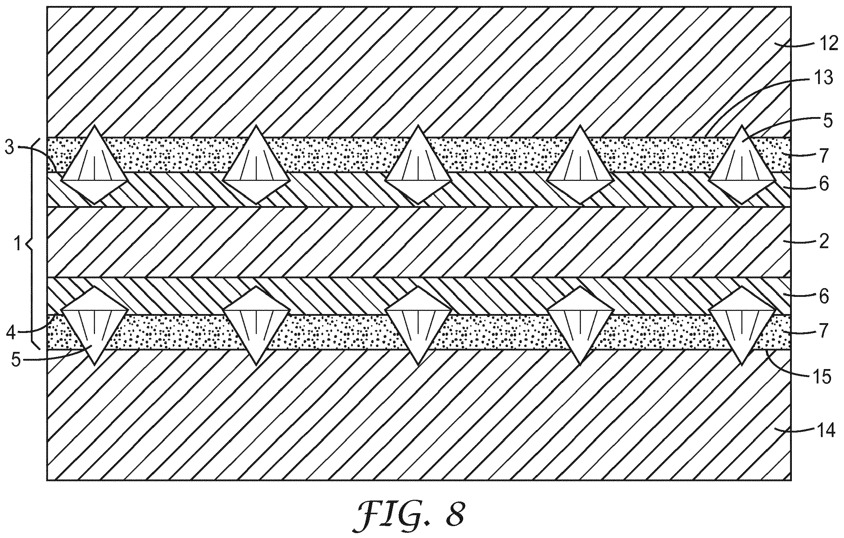

Figure 8 schematically shows a cross-sectional view of a fourth embodiment of a frictional connection according to the present disclosure, comprising a connecting element 1 as disclosed herein, a first component 12 having a component joining surface 13, and a second component 14 having a component joining surface 15. The first component 12 and the second component 14 are frictionally joined with the connecting element 1, i.e. the connecting element 1 is in frictional connection with the first and second component 12, 14 to be joined. Figure 8 corresponds to the embodiment of Figure 5, but in addition to the first joining surface 3, also the second joining surface 4 of the connecting element 1 comprises a pressure sensitive adhesive 7. This can be helpful to prevent corrosion of the connecting element.

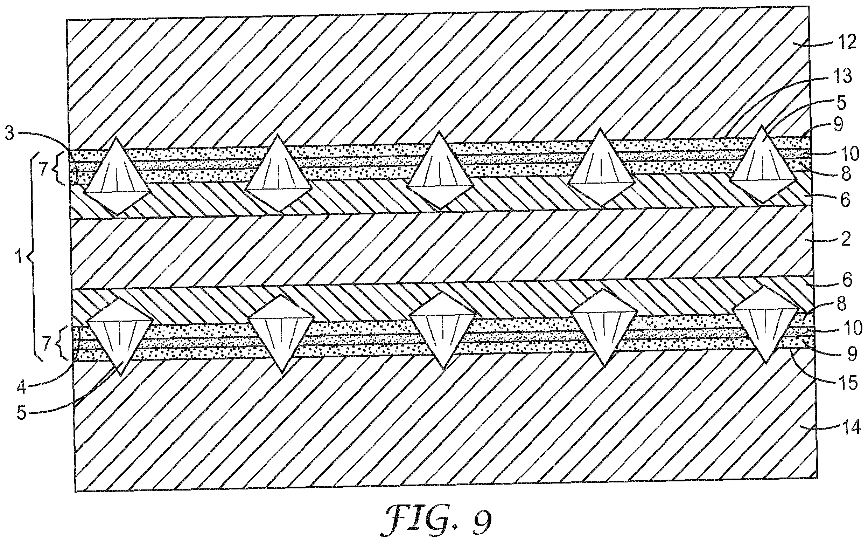

Figure 9 schematically shows a cross-sectional view of a fifth embodiment of a frictional connection according to the present disclosure, comprising a connecting element 1 as disclosed herein, a first component 12 having a component joining surface 13, and a second component 14 having a component joining surface 15. The first component 12 and the second component 14 are frictionally joined with the connecting element 1, i.e. the connecting element 1 is in frictional connection with the first and second component 12, 14 to be joined. Figure 9 corresponds to the embodiment of Figure 6, but in addition to the first joining surface 3, also the second joining surface 4 of the connecting element 1 comprises a pressure sensitive adhesive 7. This can be helpful to prevent corrosion of the connecting element.

The connecting element disclosed herein can be used to connect a first component and a second component to be joined in machine, plant and motor vehicle construction and energy generation. The connecting element disclosed herein can be used for friction-increasing connection of a first component and a second component to be joined in machine, plant and motor vehicle construction and energy generation. The connecting element disclosed herein can be used for friction-increasing, play-free and/or reversible connection of a first and a second component to be joined in machine, plant and motor vehicle construction and energy generation.

In principle, the connecting element disclosed herein can be used in any type of frictional connection throughout the field of mechanical engineering, and in particular, if the forces which can be transmitted by the component surfaces which are imposed by the design are insufficient.

For example, the connecting element disclosed herein can be used for frictional connections, such as bolted or clamped connections, between parts or components of vehicles, such as subframe and undercarriage, or crankshaft and sprocket, or in camshaft applications, or axle or damper applications, or between parts or components of wind turbines, such as segmented towers or rotor hub and rotor shaft.

The present disclosure will be described in more detail by the following examples.

Examples

Production of a connecting element (as used for Examples 1 to 3 and Comparative Example 2)

For the production of a connecting element, a circular steel foil (grade C75S - 1.1248 according to DIN EN 10132-4) with a thickness of 0.1 mm and an outer diameter of 30 mm is coated on both joining surfaces by electroless plating with a nickel layer and diamonds with a mean particle size ($d_{50}$) of 35 $\mu$m. As used herein, the circular steel foils are also referred to as "shims".

For electroless nickel plating, the shims are placed on suitable racks and are pretreated in accordance with the general rules of electroless nickel plating by degreasing, pickling and activating. Then, the carrier bearing the shims is immersed in a chemical nickel bath in which diamond powder with a mean particle size of 35 $\mu$m is dispersed. The quantity of dispersed diamond powder is selected in such a way that under the parameters prevailing in the coating bath (bath movement, deposition rate), the desired proportion of diamond in the deposited layer of nickel is achieved and the nickel layer reaches the desired thickness of up to slightly more than half the diameter of the diamond particles. Under customary process conditions, the immersion time amounts to approximately 15 to 60 minutes.

The carrier comprising the shims which are now electroless nickel plated, is then removed from the chemical nickel bath and is cleaned in an ultrasonic bath, in order to remove diamond particles which are only loosely attached to the nickel layer. The cleaned shims are taken off the carrier and are subject to a heat treatment for 2 hours at a temperature of at least 150 °C. This treatment increases the adhesion of the chemical nickel layer to the steel foil and the bonding of the diamonds in the layer itself.

The area percentage of the joining surfaces of the connecting element covered with diamonds is 20% for Examples 1 to 3 and for Comparative Example 2. The thickness of the nickel layer, i.e. of the metallic binder layer, is about 17 $\mu$m. The height of the diamonds protruding from the nickel layer is about 18 $\mu$m.

Production of continuous layer of pressure sensitive adhesive (as used for Example 1)

Materials used:

The raw materials used are summarized in Table 1 below.

Table 1:

| Name | Description | Supplier |
|---|---|---|
| Kraton D1340 | Polymodal asymmetric SIS star block copolymer (9% styrene) | Kraton polymers |
| Regalite R1010 | Liquid hydrocarbon resin | Eastman |
| Arkon P100 | Hydrocarbon tackifier | Arakawa |
| Arkon P125 | Hydrocarbon tackifier | Arakawa |
| Escorez 5340 | Hydrocarbon resin | Exxon Mobile |
| Endex 160 | Glassy block comptabile aromatic resin; softening point value (RBSP) of 160°C. | Eastman |
| Noryl SA 90 | Modified low molecular weight polyphenylene ether PPE resin with increased hydroxyl functionality (glassy block compatible aromatic resin); Tg of 140°C. | Sabic |
| Tinuvin 928 | UV Blocker | BASF |
| Irganox 1010 | Heat stabilizer | BASF |
| n-Heptane | Solvent | Sigma Aldrich |
| Butyl acetate | Solvent | Sigma Aldrich |

Adhesive preparation from solvent:

Three pressure sensitive adhesive materials PSA1, PSA2 and PSA3 were prepared, based on the combination of a star shaped SIS polymer Kraton D1340, a hydrocarbon tackifier Arkon P100, Arkon P125 or Escorez 5340, and Regalite R1010, which is primarily compatible with the rubbery blocks, and a glassy block compatible hydrocarbon aromatic resin Endex 160 or Noryl SA90.

The solid raw materials as indicated in Table 2 were weighed in a glass jar. Thereafter butyl acetate and n-heptane were added. The jar was covered with a metal lid and placed on rotating rolls. The mixture was then rolled for 2 days until all the components were dissolved.

Table 2:

|  | Composition of PSA1 | Composition of PSA2 | Composition of PSA3 |
|---|---|---|---|
|  | [parts by weight] | [parts by weight] | [parts by weight] |
| D1340K | 31.4 | 45.5 | 45.5 |
| Irganox 1010 | 1.35 | 1.35 | 1.35 |
| Tinuvin 928 | 1.5 | 1.5 | 1.5 |
| Arkon P100 | 48 |  |  |
| Arkon P125 |  | 36.5 |  |
| Escorez 5340 |  |  | 36.5 |
| Regalite R1010 | 13.5 | 7.5 | 7.5 |
| Endex160 |  |  | 7.5 |
| Noryl SA90 | 7.1 | 7.5 |  |
| Total | 102.85 | 99.85 | 99.85 |
|  |  |  |  |
| n-Heptane | 67 | 67 | 67 |
| Butyl acetate | 67 | 67 | 67 |
|  |  |  |  |
| wt.-% solids | 43.4 | 42.7 | 42.7 |

Pressure sensitive adhesive ("PSA") coating:

The solvent PSA coating was done with a lab solvent coater. The coating station is equipped with a nip feed roll. The gap between the rolls was respectively set to 70 $\mu$m, 30 $\mu$m and 25 $\mu$m to obtain the target dry film coating weight of 25 m$^2$/g, 10 m$^2$/g and 8 g/m$^2$, corresponding to a thickness of the PSA layer of 25 $\mu$m, 10 $\mu$m and 8 $\mu$m, respectively. The coater has 5 zones with 2 meters each. The temperature settings are 60 °C in zone 1, 80 °C in zone 2, 90 °C in zone 3, 110 °C in zone 4 and 130 °C in zone 5. The line speed is 2 m/min. The PSA is coated on a siliconized PET Liner (22MK) having a thickness of 75 $\mu$m, thereby obtaining a pressure sensitive adhesive film with a liner, which can be subsequently used for applying the pressure sensitive adhesive on a joining surface of a connecting element as disclosed herein.

Adhesive testing

For allowing adhesive testing, the pressure sensitive adhesive layers are laminated onto a PET backing (commercially available as Hostaphan RN 50) having a film thickness of 50 $\mu$m, resulting in a PSA tape comprising a PET backing.

180°-Peel-test at 300 mm/min (according to FINAT Test Method 1, 8th edition 2009):

The pressure sensitive adhesive film was laminated on a 50 $\mu$m thick PET backing (commercially available as Hostaphan RN 50). Pressure sensitive adhesive strips having a width of 25.4 mm and a length of > 240 mm are cut out in the machine direction from the sample material. Stainless steel (SS) panels were cleaned with a mixture of water and isopropanol 50:50 prior to use. Polypropylene samples were purchased from Aquarius plastics, the protective film was removed prior to use. For test sample preparation the liner is first removed from the adhesive side and placed on a clean test panel using light finger pressure. Next, the test samples are rolled four times with a standard FINAT test roller (weight 2.0 kg) at a speed of approximately 10 mm per second to obtain intimate contact between the adhesive mass and the surface. After applying the pressure sensitive adhesive assembly strips to the test panel, the test samples are allowed to dwell for 24 h at ambient room temperature (23 °C +/- 2 °C, 50 % relative humidity +/-5 %) prior to testing.

For peel testing the test samples are in a first step clamped in the lower movable jaw of a Zwick tensile tester (Model Z020 commercially available from Zwick/Roell GmbH, Ulm, Germany). The pressure sensitive adhesive film strips are folded back at an angle of 180° and their free end grasped in the upper jaw of the tensile tester in a configuration commonly utilized for 180° measurements. The tensile tester is set at 300 mm per minute jaw separation rate. Test results are expressed in Newton per 10 mm (N/10 mm). The quoted peel values are the average of two 180°-peel measurements.

Static Shear-Test at RT with 1000 q (according to FINAT Test Method 8, 8th edition 2009):

The pressure sensitive adhesive film is laminated on a 50 μm thick PET backing (commercially available as Hostaphan RN 50). Test specimen are cut out of the sample material having a dimension of 25.4 mm x 175 mm. The liner is then removed and the adhesive strips are adhered onto to stainless steel plate with an overlap of 25,4 x 25,4 mm. A loop is prepared at the end of the test strip in order to hold the specified weight. Next, the test samples are rolled twice with a standard FINAT test roller (weight 2 kg) at a speed of approximately 10 mm per second to obtain intimate contact between the adhesive mass and the surface. After applying the pressure sensitive adhesive assembly strips to the test panel, the test samples are allowed to dwell for 24h at ambient room temperature (23 °C +/- 2 °C, 50 % relative humidity +/-5 %) prior to testing.
Each sample is then placed into a vertical shear-stand (+2° disposition) at RT with automatic time logging. After 10 minutes dwell time in the oven, a 1000 g weight is hung into the loop. The time until failure is measured and recorded in minutes. Target value is 10.000 minutes. Two samples were measured for each construction. A recorded time of ">10000" indicates that the adhesive did not fail after 10000 min. Failure modes are given as followed: PO for pop-off, AT for adhesive transfer and CF for cohesive failure.

Static Shear-Test at 90°C with 1000 q (according to FINAT Test Method 8, 8th edition 2009):

The sample preparation is the same as described for the static shear test at RT. The test is carried out in an oven at 90°C with a 1000 g weight.

Test results of adhesive testing:

The peel performance of the 10 and 25 μm thick PSA constructions was tested in a 180° peel test on stainless steel and polypropylene substrates.
The static shear resistance of the PSA constructions was tested at RT and 90°C on stainless steel. The test results are summarized in Table 3.

Table 3:

|  | PSA1 | PSA1 | PSA2 | PSA2 | PSA3 | PSA3 |
|---|---|---|---|---|---|---|
| PSA thickness [μm] | 10 | 25 | 10 | 25 | 10 | 25 |
| Peel adhesion [N/10 mm], stainless steel | 6.3 | 8.6 | 6.9 | 7.0 | 6.0 | 7.2 |
| Peel adhesion [N/10 mm], polypropylene | 6.5 | 7.5 | 6.6 | 6.6 | 6.2 | 7.0 |
| Static shear resistance at RT [min] | 10.000 | 10.000 | 10.000 | 10.000 | 10.000 | 10.000 |
| Static shear resistance at 90 °C [min] | 10.000 | 10.000 | 10.000 | 10.000 | 10.000 | 10.000 |

Preparation of adhesive microspheres (as used for Example 3)

A 3-liter reaction flask fitted with mechanical stirrer was charged with 410 g (90 mole percent) iso-octyl acrylate, 38 g (10 mole percent) triethylamine methacrylimide, 1500 ml deoxygenated distilled water, and 20 g alkyl aryl-polyethylene oxide sodium sulfonate (commercially available from the Rohm and Haas Company under the trade designation "Triton" X-200). The flask was purged with nitrogen, 1.5 g benzoyl peroxide added, and the mixture heated to 66 °C, and stirred vigorously (about 500 rpm) for 20 hours at 66 °C under nitrogen.

At the end of the 20 hours, the suspension was cooled to 20 °C and filtered through cheesecloth to remove agglomerates, and the solid polymer recovered by coagulation and washing with methanol, to provide a 95 - 98 percent yield of discrete microspheres ranging in diameter from about 10 to about 150 microns. The copolymer spheres obtained are dispersible, but insoluble, in iso-propanol, ethyl acetate, 2-butanone, toluene, and heptane.

<u>Applying a pressure sensitive adhesive onto the first joining surface of the connecting element (as performed for Examples 1 to 3)</u>

For Example 1, for applying a pressure sensitive adhesive onto the first joining surface of the connecting element, a connecting element produced as described above was put on the adhesive coated side of the pressure sensitive adhesive film produced as described above for PSA2. On the other side of the pressure sensitive adhesive film with the siliconized PET liner, a rubber plate having a thickness of 2 mm is positioned on the liner and pressed onto the pressure sensitive adhesive film being placed on the first joining surface of the connecting element. The applied pressure is 3,6 MPa. Now the liner can be removed without any residues of adhesive, thereby obtaining the connecting element having a pressure sensitive adhesive applied onto the first joining surface.

For Example 2, for applying a pressure sensitive adhesive onto the first joining surface of the connecting element, a connecting element produced as described above was put on the first side of the two adhesive coated sides of a double-sided pressure sensitive adhesive tape having a thickness of 5 $\mu$m (3M™ Electronic Double Sided Tape 82600, commercially available from 3M Company) after the liner of the first side has been removed. On the second side of the double-sided pressure sensitive adhesive tape, a rubber plate having a thickness of 2 mm is positioned on the liner of the second side and pressed onto the double-sided pressure sensitive adhesive tape being placed on the first joining surface of the connecting element. The applied pressure is 3,6 MPa. Now the liner of the second side can be removed without any residues of adhesive, thereby obtaining the connecting element having a pressure sensitive adhesive applied onto the first joining surface.

For Example 3, for applying a pressure sensitive adhesive onto the first joining surface of the connecting element, adhesive microspheres prepared as described above were dispersed in toluene and heptane with a solids content of 10 wt.-% and were sprayed onto the first joining surface of a connecting element produced as described above. For spraying, a spraying equipment available from Graco Merkur (G30C67 airless 4.5 l/min pump with a G15/G40 air assist spray gun) was used. The spraying was carried out at a distance of 20 cm at a rate of approximately 90 meters per minute. The connecting element was dried in a circulating air oven at 50 °C for about 5 seconds. The dry weight of the adhesive microspheres sprayed onto the connecting element was 5 mg. The first joining surface of the connecting element was found to be covered with adhesive islands occupying 30% of the joining surface of the connecting element. The diameter of the islands was about 0.05 to 0.10 mm, the thickness ranging from 0.01 to 0.05 mm.

Friction testing

The coefficient of static friction is determined by an experimental set-up in which the friction contact is produced by clamping a center steel block (steel grade S355) with dimensions 14 x 14 x 25 mm between two outer steel blocks (steel grade S355; sample 1, sample 2) with larger dimensions (30 x 30 x 25 mm) that are pressed by a defined force, representing the normal force, onto the center block. The normal force is generated using a clamping mechanism that is using at least two big screws. The contact pressure for the tests was 50 MPa.

For Comparative Example 2, a connecting element is positioned between sample 1 and the central block and another connecting element is positioned between sample 2 and the central block. For Examples 1 to 3, a connecting element with a pressure sensitive adhesive on the first joining surface is positioned between sample 1 and the central block, with the adhesive adhering on sample 1. A further connecting element with a pressure sensitive adhesive on the first joining surface is positioned between sample 2 and the central block, with the adhesive adhering on sample 2.

The outer blocks (sample 1, sample 2) are positioned on a stiff and flat base plate. The center block is positioned centrally with respect to the outer blocks. This results in a defined distance of the center block from the base plate.

A shear test is performed by applying a compressive load on the center block from top via a piston. The compressive load is representing the friction force. The test is done using a universal testing machine (Zwick GmbH, Model 1474). The friction force is increased until the center block starts to move relative to the outer blocks (these cannot move since they are positioned on the base plate) in direction towards the base plate. The maximum movement of the center block is set to 500 $\mu$m. During the shear test normal force, friction force, and distance of the center block from the base plate are measured continuously.

The measured values of friction force and normal force are used to calculate the coefficient of friction that is defined as the ratio of friction force/normal force. The measured distance of the center block from the base plate is used to calculate the movement of the center block relative to the outer blocks. In this way, the coefficient of friction can be obtained in dependence on the relative movement, representing the friction behavior or the friction curve. This friction curve is used to determine characteristic values as e.g. for defined relative movements or the maximum coefficient of friction which corresponds to the maximum of the friction curve. The coefficient of static friction $\mu_{sat}$ is defined as the coefficient of friction at a relative movement of 20 $\mu$m or as the maximum coefficient of friction if the relative movement at the maximum of the friction curve is below 20 $\mu$m.

Examples 1 to 3 and Comparative Examples 1 to 2

For Comparative Example 1, for the friction test no connecting elements were positioned between the center block and sample 1 and between the center block and sample 2.

For Comparative Example 2, two circular steel foils (grade C75S - 1.1248 according to DIN EN 10132-4) with a thickness of 0.1 mm and an outer diameter of 30 mm are coated on both joining surfaces by electroless plating with a nickel layer and diamonds with a mean particle size ($d_{50}$) of 35 $\mu$m, as described above. One of the two steel foils coated with a nickel layer and diamonds is positioned between the center block and sample 1 and the other one between the center block and sample 2.

For Example 1, two circular steel foils (grade C75S - 1.1248 according to DIN EN 10132-4) with a thickness of 0.1 mm and an outer diameter of 30 mm are coated on both joining surfaces by electroless plating with a nickel layer and diamonds with a mean particle size ($d_{50}$) of 35 $\mu$m, as described above. Onto the first joining surface of the two ring-shaped steel foils coated with a nickel layer and diamonds, a pressure sensitive adhesive PSA2 was applied as described above, with a thickness of 8 $\mu$m. For the friction test, the two circular steel foils coated with a nickel layer and diamonds on both joining surfaces, and with the adhesive on the first joining surface, were then pressed with a pressure of 5 kPa with the first joining surface onto sample 1 and sample 2, respectively.

For Example 2, two circular steel foils (grade C75S - 1.1248 according to DIN EN 10132-4) with a thickness of 0.1 mm and an outer diameter of 30 mm are coated on both joining surfaces by electroless plating with a nickel layer and diamonds with a mean particle size ($d_{50}$) of 35 $\mu$m, as described above. Onto the first joining surface of the two circular steel foils coated with a nickel layer and diamonds, a double-sided pressure sensitive adhesive tape (3M™ Electronic Double Sided Tape 82600, commercially available from 3M Company) having a thickness of 5 $\mu$m was applied as described above. For the friction test, the two circular steel foils coated with a nickel layer and diamonds on both joining surfaces, and with the adhesive on the first joining surface, were then pressed with a pressure of 5 kPa with the first joining surface onto sample 1 and sample 2, respectively.

For Example 3, two circular steel foils (grade C75S - 1.1248 according to DIN EN 10132-4) with a thickness of 0.1 mm and an outer diameter of 30 mm are coated on both joining surfaces by electroless plating with a nickel layer and diamonds with a mean particle size ($d_{50}$) of 35 $\mu$m, as described above. Onto the first joining surface of the two circular steel foils coated with a nickel layer and diamonds, 5 mg of adhesive microspheres of 30 $\mu$m diameter were sprayed as described above. For the friction test, the two circular steel foils coated with a nickel layer and diamonds on both joining surfaces, and with the adhesive on the first joining surface, were then pressed with a pressure of 5 kPa with the first joining surface onto sample 1 and sample 2, respectively.

The results of friction testing of Comparative Examples 1 to 2 and Examples 1 to 3 are shown in Table 4.

The friction tests show that a frictional connection with a connecting element as disclosed herein, comprising a pressure sensitive adhesive, can have a coefficient of static friction which is even higher than for a frictional connection with a connecting element without a pressure sensitive adhesive.

Table 4:

| Example No. | Coefficient of static friction $\mu_{stat}$ |
|---|---|
| Comparative Example 1 | 0.17 |
| Comparative Example 2 | 0.69 |
| Example 1 | 1.09 |
| Example 2 | 1.45 |
| Example 3 | 0.79 |

**Claims**

1. A connecting element (1) comprising a metal substrate (2) having a first joining surface (3) on one side of the substrate (2) and a second joining surface (4) on an opposite side of the substrate (2), wherein each joining surface (3, 4) comprises hard particles (5) fixed on the metal substrate (2) by a metallic binder layer (6), and wherein the connecting element (1) further comprises a pressure sensitive adhesive (7) on at least one part of the first joining surface (3).

2. The connecting element (1) of claim 1, wherein the pressure sensitive adhesive (7) comprises a continuous layer.

3.  The connecting element (1) according to claim 2, wherein the continuous layer comprises a first layer (8) of a first pressure sensitive adhesive and a second layer (9) of a second pressure sensitive adhesive, and wherein a carrier layer (10) is positioned between the first and the second layer.

4.  The connecting element (1) according to any one of claims 2 to 3, wherein the thickness of the continuous layer is less than the mean particle size ($d_{50}$) of the hard particles (5) from which the thickness of the metallic binder layer (6) is subtracted.

5.  The connecting element of claim 1, wherein the pressure sensitive adhesive comprises a plurality of discontinuous islands.

6.  The connecting element (1) according to claim 5, wherein the thickness of the islands is from 10 to 150 $\mu$m.

7.  The connecting element (1) according to any one of claims 5 to 6, wherein the islands cover from 10% to 75% of at least one of the joining surfaces.

8.  The connecting element (1) according to any one of the preceding claims, wherein the pressure sensitive adhesive is selected from the group consisting of rubber-based pressure sensitive adhesives, acrylic-based pressure sensitive adhesives, and silicone-based pressure sensitive adhesives.

9.  The connecting element (1) according to any one of the preceding claims, wherein the pressure sensitive adhesive is a rubber-based pressure sensitive adhesive and comprises:

    a) a multi-arm block copolymer of the formula $Q_n$-Y, wherein:

    (i) Q represents an arm of the multi-arm block copolymer and each arm independently has the formula G-R,
    (ii) n represents the number of arms and is a whole number of at least 3, and
    (iii) Y is the residue of a multifunctional coupling agent,
    wherein each R is a rubbery block comprising a polymerized conjugated diene, a hydrogenated derivative of a polymerized conjugated diene, or combinations thereof; and each G is a glassy block comprising a polymerized monovinyl aromatic monomer; and

    b) at least one hydrocarbon tackifier which is primarily compatible with the rubbery blocks.

10. The connecting element (1) according to any one of the preceding claims, wherein the pressure sensitive adhesive is an acrylic-based pressure sensitive adhesive and comprises:

    a) at least one copolymer comprising:

    i) an acrylic or methacrylic acid ester of a non-tertiary alcohol, and
    ii) pendant styrenic polymeric moieties; and

    b) a polyarylene oxide polymer.

11. A process for producing a connecting element (1) according to any one of claims 1 to 10, comprising

    providing a metal substrate (2) having a first joining surface (3) on one side of the substrate (2) and a second joining surface (4) on an opposite side of the substrate (2),
    fixing hard particles (5) on each joining surface (3, 4) with a metallic binder layer (6), and
    applying a pressure sensitive adhesive (7) onto at least one part of the first joining surface (3).

12. A process for fixing a connecting element (1) to a first component (12) having a component joining surface (13), comprising

    providing a connecting element (1) according to any of claims 1 to 10, and
    bonding the pressure sensitive adhesive (7) on the first joining surface (3) of the connecting element (1) to the component joining surface (13) of the first component (12).

**13.** The process of claim 12, further comprising

pressing the hard particles (5) of the first joining surface (3) of the connecting element (1) into the component joining surface (13) of the first component (12), and
pressing the hard particles (5) of the second joining surface (4) of the connecting element (1) into the component joining surface (15) of a second component (14),
thereby frictionally-coupling the first component (12) and the second component (14) with the connecting element (1).

**14.** A frictional connection comprising a first component (12) having a component joining surface (13), a second component (14) having a component joining surface (15), and a connecting element (1) according to any of claims 1 to 10, wherein the first and second component (12, 14) are frictionally joined with the connecting element (1).

**15.** Use of a connecting element (1) according to any of claims 1 to 10 to connect a first component (12) and a second component (14) to be joined in machine, plant and motor vehicle construction and energy generation.

FIG. 1

FIG. 2

EP 3 584 296 A1

FIG. 3

*FIG. 4*

*FIG. 5*

EP 3 584 296 A1

FIG. 6

*FIG. 7*

*FIG. 8*

FIG. 9

Europäisches
Patentamt

European
Patent Office

Office européen
des brevets

# EUROPEAN SEARCH REPORT

**Application Number**

EP 18 17 8427

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2017/063761 A1 (BAYERISCHE MOTOREN WERKE AG [DE]) 20 April 2017 (2017-04-20) <br> * page 1, line 17 - page 2, line 15 * <br> * page 3, line 1 - line 17 * <br> * page 5, line 12 - page 6, line 2 * <br> * claims 1, 2, 4, 6, 8-10, 12, 13 * <br> ----- | 1-15 | INV. <br> C09J7/38 <br> C09D151/08 <br> C09J7/28 <br> B32B3/00 <br> F16B2/00 |
| Y | EP 1 564 418 A1 (AHC OBERFLAECHENTECHNIK GMBH [DE]; HUGO BENZING GMBH & CO KG [DE]) 17 August 2005 (2005-08-17) <br> * claims 1-3, 7, 12 * <br> ----- | 1-15 | |
| A | DE 10 2005 006937 A1 (VOLKSWAGEN AG [DE]) 24 August 2006 (2006-08-24) <br> * paragraph [0001] * <br> * paragraph [0006] * <br> * paragraph [0014] - paragraph [0015] * <br> * paragraph [0026] * <br> * claims 9-13, 18 * <br> ----- | 1-15 | |
| A | WO 2015/082365 A1 (CCT COMPOSITE COATING TECHNOLOGIES GMBH [DE]) 11 June 2015 (2015-06-11) <br> * claims 1,6 * <br> * page 8, line 5 - line 30 * <br> ----- | 1-15 | TECHNICAL FIELDS SEARCHED (IPC) <br><br> C09J <br> C09D <br> B32B <br> F16B |

The present search report has been drawn up for all claims

| Place of search | Date of completion of the search | Examiner |
|---|---|---|
| Munich | 18 December 2018 | Siemsen, Beatrice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 17 8427

18-12-2018

| Patent document cited in search report | Publication date | Patent family member(s) | | Publication date |
|---|---|---|---|---|
| WO 2017063761 A1 | 20-04-2017 | CN | 107709800 A | 16-02-2018 |
| | | DE | 102015220169 A1 | 20-04-2017 |
| | | EP | 3362692 A1 | 22-08-2018 |
| | | US | 2018231033 A1 | 16-08-2018 |
| | | WO | 2017063761 A1 | 20-04-2017 |
| EP 1564418 A1 | 17-08-2005 | AT | 321951 T | 15-04-2006 |
| | | EP | 1564418 A1 | 17-08-2005 |
| DE 102005006937 A1 | 24-08-2006 | NONE | | |
| WO 2015082365 A1 | 11-06-2015 | DE | 102013113616 A1 | 11-06-2015 |
| | | EP | 3077682 A1 | 12-10-2016 |
| | | WO | 2015082365 A1 | 11-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6347905 B1
- US 2003077115 A1
- US 20110039119 A1
- US 7163741 B1, Khandpur
- US 5296547 A, Nestegard
- US 5393787 A, Nestegard
- US 3691140 A
- US 4190321 A
- US RE24906 E
- US 5194299 A